# FASCICULE DE BREVET EUROPEEN

(11) **EP 2 936 188 B1**
(45) Date de publication et mention de la délivrance du brevet: **25.05.2016**
(21) Numéro de dépôt: 14735495.5
(22) Date de dépôt: 24.06.2014
(51) Int. Cl.: G01S 3/48, G01S 5/02, B64G 1/00, B64G 1/40, B64G 3/00

(54) **PROCÉDÉ ET SYSTÈME DE SURVEILLANCE D'UNE PHASE DE TRANSFERT D'UN SATELLITE D'UNE ORBITE INITIALE VERS UNE ORBITE DE MISSION**
VERFAHREN UND SYSTEM ZUR ÜBERWACHUNG EINES PHASE ZUR ÜBERTRAGUNG EINES SATELLITEN AUS EINER ERSTEN UMLAUFBAHN ZU EINER MISSIONSUMLAUFBAHN
METHOD AND SYSTEM FOR MONITORING A PHASE FOR TRANSFERRING A SATELLITE FROM AN INITIAL ORBIT TO A MISSION ORBIT

(30) Priorité: 24.06.2013 FR 1355981
(43) Date de publication de la demande: 28.10.2015
(73) Titulaire: Airbus Defence and Space SAS, 78130 Les Mureaux (FR)
(72) Inventeur: AYMES, Jean-Marc, F-31650 Saint Orens de Gameville (FR)
(74) Mandataire: Ipside
(86) Numéro de dépôt international: PCT/EP2014/063282
(87) Numéro de publication internationale: WO 2014/206984

(56) Documents cités:
- EP-A2- 1 059 232
- US-A- 3 553 697

## Description

### DOMAINE TECHNIQUE

La présente invention appartient au domaine de l'observation de satellites en orbite terrestre. La présente invention concerne plus particulièrement un système et un procédé de surveillance d'une phase de transfert d'un satellite depuis une orbite terrestre, dite « orbite initiale », vers une autre orbite terrestre, dite « orbite de mission ». Cette surveillance a notamment pour objet la génération de mesures d'azimut et d'élévation, à des fins de restitution d'orbite du satellite pendant la phase de transfert.

La présente invention trouve une application particulièrement avantageuse, bien que non limitative, pour la surveillance de la mise à poste de satellites en orbite géostationnaire (« Geostationary Orbit » ou « GEO ») à partir d'une orbite de transfert géostationnaire (« Geostationary Transfer Orbit » ou « GTO ») en particulier lorsque la mise à poste est effectuée par des moyens de propulsion électriques du satellite ou d'un véhicule porteur assurant le transport dudit satellite depuis l'orbite GTO vers l'orbite GEO.

### ÉTAT DE LA TECHNIQUE

Des stations terrestres de télémesure/télécommande (TT&C) sont généralement mises en oeuvre pour surveiller la phase de transfert d'un satellite depuis une orbite initiale, sur laquelle ledit satellite a été injecté par un lanceur, vers une orbite GEO.

De telles stations TT&C comportent une antenne très directive afin d'assurer un niveau de réception suffisant pour décoder un signal TT&C émis par le satellite au cours de la phase de transfert, et mobile afin de suivre le déplacement dudit satellite pendant la phase de transfert.

L'utilisation de stations TT&C est très coûteuse, de sorte que la durée de location d'une station TT&C doit de préférence être réduite au maximum.

Toutefois, dans le cas d'une mise à poste en orbite GEO par des moyens de propulsion électriques, la durée de transfert dure entre environ 3 mois (dans le cas d'une mise à poste par des moyens de propulsion mixtes électriques/chimiques) et environ 6 mois (dans le cas d'une mise à poste par des moyens de propulsion exclusivement électriques).

Une méthode de mise à poste d'un satellite sur une orbite géosynchrone, utilisant des moyens de propulsion électriques, est par exemple connue de la demande de brevet européen EP 1059232 A2.

Les coûts de location de stations TT&C sur de telles durées (3 à 6 mois) sont prohibitifs. En outre, si la mise à poste en orbite GEO par des moyens de propulsion électrique continue à se développer, les réseaux de stations TT&C actuels seront rapidement dépassés par la demande.

Une alternative consisterait à n'utiliser les stations TT&C pour ne surveiller qu'occasionnellement la phase de transfert du satellite. Dans un tel cas, la trajectoire prévue dudit satellite serait utilisée pour estimer la direction du satellite au moment d'utiliser une station TT&C, afin de diriger l'antenne de ladite station TT&C dans la direction prévue.

Toutefois, si le satellite ne se trouve pas dans la direction prévue, par exemple du fait d'une défaillance des moyens de propulsion électriques, ledit satellite sera perdu et ne pourra éventuellement être retrouvé qu'en effectuant un balayage long et coûteux de l'espace au moyen d'une ou de plusieurs stations TT&C.

### EXPOSÉ DE L'INVENTION

La présente invention a pour objectif de remédier à tout ou partie des limitations des solutions de l'art antérieur, notamment celles exposées ci-avant, en proposant une solution qui permette d'effectuer la surveillance de la mise à poste d'un satellite à moindre coût et sans risque de le perdre.

A cet effet, et selon un premier aspect, l'invention concerne un procédé de surveillance d'une phase de transfert d'un satellite depuis une orbite terrestre, dite « orbite initiale », vers une autre orbite terrestre, dite « orbite de mission », notamment un transfert utilisant des moyens de propulsion électriques. Selon l'invention, le procédé comporte une étape d'estimation de la direction du satellite au moyen d'une antenne réseau terrestre comportant une pluralité d'antennes élémentaires, chaque antenne élémentaire présentant un lobe principal de rayonnement de largeur égale ou supérieure à 20°, lesdites antennes élémentaires étant orientées de sorte que leurs champs de vision respectifs se recouvrent, la position dudit satellite étant estimée en fonction d'au moins une mesure de différence de phase, dite « différence de phase utile », entre des signaux correspondant à un signal cible, émis par ledit satellite au cours de la phase de transfert, et reçu sur une paire d'antennes élémentaires de l'antenne réseau.

Une telle antenne réseau, constituée d'antennes élémentaires peu directives, peut couvrir simultanément un champ de vision large, et peut par conséquent être utilisée pour surveiller simultanément plusieurs satellites dans un même angle solide important et/ou rechercher le satellite dans un angle solide important sans avoir à déplacer l'antenne réseau.

Dans des modes particuliers de mise en oeuvre, le procédé peut comporter en outre l'une ou plusieurs des caractéristiques suivantes, prises isolément ou selon toutes les combinaisons techniquement possibles.

Dans des modes particuliers de mise en oeuvre, les antennes élémentaires de l'antenne réseau ne sont pas coplanaires.

Dans des modes particuliers de mise en oeuvre, une antenne de réception, dite « antenne directive », de gain maximal supérieur aux gains maximaux respectifs de chacune des antennes élémentaires de l'antenne réseau est dirigée dans la direction du satellite, estimée au moyen de l'antenne réseau, pour recevoir le signal cible émis par ledit satellite.

Dans des modes particuliers de mise en oeuvre, lorsque plusieurs directions possibles du satellite sont estimées au moyen de l'antenne réseau, l'antenne directive est dirigée dans chaque direction possible pour déterminer la direction réelle dudit satellite.

Dans un mode particulier de mise en oeuvre, le procédé comporte :
- l'émission, par un émetteur de calibration de référence immobile par rapport à l'antenne réseau, d'un signal de calibration de référence à destination de l'antenne réseau,
- la mesure d'une différence de phase, dite « différence de phase de calibration », entre des signaux correspondant au signal de calibration de référence reçu sur la paire d'antennes élémentaires,
- la compensation des variations des mesures de différence de phase de calibration pour la paire d'antennes élémentaires sur les mesures de différence de phase utile.

De manière connue, les chaînes de réception de chaque antenne élémentaire peuvent introduire des biais différentiels de phase, qui peuvent être calibrés lors de la fabrication de l'antenne réseau. Toutefois, les instabilités de phase desdites chaînes de réception peuvent rendre ces biais différentiels de phase variables au cours du temps, de sorte que la calibration initiale peut devenir insuffisante si lesdites variations sont importantes.

Grâce à l'émission et au traitement du signal de calibration de référence, il est possible d'estimer en continu les variations du biais différentiel de phase, et de les compenser sur les mesures de différence de phase utile. De la sorte, les contraintes, en termes de stabilité de phase des chaînes de réception de chaque antenne élémentaire, peuvent être relâchées, de sorte qu'elles peuvent être équipées de composants moins coûteux.

Dans un mode particulier de mise en oeuvre, le signal de calibration de référence est émis au cours d'un intervalle d'acquisition des signaux correspondant au signal cible reçu sur la paire d'antennes élémentaires, et la mesure de la différence de phase utile pour ladite paire d'antennes élémentaires comporte une corrélation desdits signaux acquis entre eux sur toute la durée de l'intervalle d'acquisition, plusieurs mesures de différence de phase de calibration étant effectuées, au cours dudit intervalle d'acquisition, pour compenser les variations des mesures de différence de phase de calibration sur les signaux acquis.

De telles dispositions permettent d'améliorer le rapport signal sur bruit du signal cible. En effet, du fait que les antennes élémentaires sont peu directives, il peut s'avérer nécessaire d'augmenter la durée d'observation du signal cible pour pouvoir le détecter, et éventuellement le décoder. En observant les signaux reçus sur des intervalles d'acquisition plus longs, les biais différentiels de phase introduits par les instabilités de phase des chaînes de réception peuvent varier significativement au cours des intervalles d'acquisition, y compris pour les chaînes de réception équipées de composants stables et coûteux.

II est donc avantageux d'effectuer plusieurs mesures de différence de phase de calibration, afin de corriger en continu, sur toute la durée d'un intervalle d'acquisition, les variations de biais différentiels de phase induites par les instabilités de phase des chaînes de réception.

Dans un mode particulier de mise en oeuvre, la mesure de différence de phase de calibration pour la paire d'antennes élémentaires comporte soit la corrélation des signaux reçus sur ladite paire d'antennes élémentaires avec le signal de calibration de référence émis, soit l'analyse desdits signaux reçus au moyen d'une FFT ou d'une PLL.

De telles dispositions permettent d'améliorer le rapport signal sur bruit du signal de calibration de référence reçu.

Dans un mode particulier de mise en oeuvre, le procédé comporte une étape de calibration géométrique de l'antenne réseau, au cours de laquelle la géométrie de l'antenne réseau est estimée en fonction de mesures de différence de phase entre des signaux correspondant à des signaux de calibration géométrique émis par des émetteurs de calibration géométrique et reçus sur l'antenne réseau, et en fonction des positions desdits émetteurs de calibration géométrique et de la position de l'antenne réseau.

Dans un mode particulier de mise en oeuvre, les signaux correspondant à tout ou partie des signaux de calibration géométrique reçus sur l'antenne réseau sont acquis séquentiellement au cours d'intervalles d'acquisition distincts, ledit procédé comportant, pour l'acquisition d'un signal de calibration géométrique, une étape de commande de l'émetteur de calibration de référence de sorte à translater fréquentiellement le signal de calibration de référence dans une bande fréquentielle d'acquisition dudit signal de calibration géométrique, les variations des mesures de différence de phase de calibration étant compensées sur les mesures de différence de phase entre lesdits signaux correspondant audit signal de calibration géométrique.

De telles dispositions permettent d'effectuer la calibration géométrique de l'antenne réseau à partir de signaux de calibration géométrique pouvant être très espacés en fréquences, tout en utilisant des bandes fréquentielles d'acquisition étroites. En effet, une bande fréquentielle d'acquisition spécifique adaptée peut être utilisée pour chaque signal de calibration géométrique, dans laquelle l'émetteur de calibration de référence émet également le signal de calibration de référence afin de permettre de corriger si nécessaire les instabilités de phase des chaînes de réception pour chaque signal de calibration géométrique.

Selon un second aspect, l'invention concerne un système de surveillance d'une phase de transfert d'un satellite depuis une orbite terrestre, dite « orbite initiale », vers une autre orbite terrestre, dite « orbite de mission », notamment un transfert utilisant des moyens de propulsion électriques. Selon l'invention, le système comporte :
- une antenne réseau terrestre comportant une pluralité d'antennes élémentaires, chaque antenne élémentaire présentant un lobe principal de rayonnement de largeur égale ou supérieure à 20°, lesdites antennes élémentaires étant orientées de sorte que leurs champs de vision respectifs se recouvrent,
- des moyens adaptés à estimer la direction du satellite au cours de ladite phase de transfert en fonction d'au moins une mesure de différence de phase, dite « différence de phase utile », entre des signaux correspondant à un signal cible, émis par ledit satellite au cours de la phase de transfert, et reçu sur une paire d'antennes élémentaires de l'antenne réseau.

Dans des modes particuliers de réalisation, le système peut comporter en outre l'une ou plusieurs des caractéristiques suivantes, prises isolément ou selon toutes les combinaisons techniquement possibles.

Dans des modes particuliers de réalisation, les antennes élémentaires de l'antenne réseau ne sont pas coplanaires.

Dans des modes particuliers de réalisation, le système de surveillance comporte une antenne de réception, dite « antenne directive », de gain maximal supérieur aux gains maximaux respectifs de chacune des antennes élémentaires de l'antenne réseau.

Dans un mode particulier de réalisation, les antennes élémentaires de l'antenne réseau sont solidaires les unes des autres et fixées à une même structure porteuse.

De telles dispositions permettent de limiter les instabilités de phase induites par la géométrie même de l'antenne réseau. L'antenne réseau, d'un seul tenant et rigide mécaniquement grace à la structure porteuse, est en outre facile à installer et à déplacer.

Dans un mode particulier de réalisation, la distance maximale entre antennes élémentaires de l'antenne réseau est égale ou inférieure à 50·λ_{MAX}, λ_{MAX} correspondant à la longueur d'onde maximale des signaux à acquérir au moyen de ladite antenne réseau.

De telles dispositions permettent d'avoir une antenne réseau facile à déplacer et de limiter les ambiguïtés sur les mesures de différence de phase.

Dans un mode particulier de réalisation, la distance minimale entre antennes élémentaires est égale ou supérieure à 5·λ_{MAX}.

De telles dispositions permettent d'assurer une bonne précision sur l'estimation de la direction du satellite.

Dans un mode particulier de réalisation, le système comporte :
- un émetteur de calibration de référence immobile par rapport à l'antenne réseau, ledit émetteur de calibration de référence étant adapté à émettre un signal de calibration de référence à destination de l'antenne réseau,
- des moyens adaptés à mesurer une différence de phase, dite « différence de phase de calibration », entre des signaux correspondant au signal de calibration de référence reçu sur la paire d'antennes élémentaires,
- des moyens adaptés à compenser les variations des mesures de différence de phase de calibration pour la paire d'antennes élémentaires sur les mesures de différence de phase utile.

Dans un mode particulier de réalisation, le système comporte des moyens adaptés à commander l'émetteur de calibration de référence de sorte à translater fréquentiellement le signal de calibration de référence.

Dans un mode particulier de réalisation, les moyens adaptés à mesurer la différence de phase de calibration sont configurés pour effectuer soit une corrélation des signaux reçus sur ladite paire d'antennes élémentaires avec le signal de calibration de référence émis, soit une analyse desdits signaux reçus au moyen d'une FFT ou d'une PLL.

Dans un mode particulier de réalisation, l'émetteur de calibration de référence est un émetteur terrestre ou un émetteur embarqué dans un satellite en orbite géostationnaire.

Dans un mode particulier de réalisation, le système comporte des moyens adaptés à calibrer géométriquement l'antenne réseau en fonction de mesures de différence de phase entre des signaux correspondant à des signaux de calibration géométrique émis par des émetteurs de calibration géométrique et reçus sur l'antenne réseau, et en fonction des positions desdits émetteurs de calibration géométrique.

Dans un mode particulier de réalisation, au moins un émetteur de calibration géométrique est un émetteur embarqué dans un satellite en orbite géostationnaire ou dans un satellite en orbite défilante, de préférence un satellite d'un système de navigation par satellite (« Global Navigation Satellite System » ou GNSS), ou encore un émetteur terrestre.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un exemple de réalisation d'un système de surveillance d'une phase de transfert d'un satellite,
- Figure 2 : des représentations schématiques d'exemples de réalisation d'antennes réseau,
- Figure 3 : une représentation schématique d'un mode préféré de réalisation d'une antenne réseau selon l'invention,
- Figure 4 : une représentation schématique d'un autre mode préféré de réalisation d'une antenne réseau selon l'invention,
- Figure 5 : une représentation schématique d'un mode préféré de réalisation d'un système de surveillance,
- Figure 6 : un diagramme représentant différentes étapes d'un procédé de surveillance selon un exemple de mise en oeuvre.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

La présente invention concerne un système 10 et un procédé 70 de surveillance d'une phase de transfert d'un satellite 20 depuis une orbite terrestre, dite « orbite initiale », vers une autre orbite terrestre, dite « orbite de mission ». Dans la suite de la description, on se place de manière non limitative dans le cas où l'orbite de mission est l'orbite GEO, et où l'orbite initiale est une orbite GTO sur laquelle le satellite 20 est placé en utilisant un moyen de lancement, tel qu'un lanceur conventionnel de la gamme d'Ariane 5.

De manière conventionnelle, la mise à poste en orbite GEO d'un satellite 20 à partir d'une orbite GTO utilise des moyens de propulsion dudit satellite 20 et/ou des moyens de propulsion d'un véhicule porteur assurant le transport dudit satellite sur une partie au moins du trajet entre l'orbite GTO et l'orbite GEO.

L'invention trouve une application particulièrement avantageuse dans le cas d'une utilisation de moyens de propulsion électriques sur tout ou partie du trajet entre l'orbite GTO et l'orbite GEO. En effet, tel qu'indiqué précédemment, la durée du transfert est alors importante (3 à 6 mois), de sorte que la location de stations TT&C pendant toute la durée du transfert représente un coût trop important, mais constitue également une utilisation inefficace des stations TT&C.

Rien n'exclut, toutefois, d'utiliser l'invention pour surveiller une phase de transfert d'un satellite utilisant des moyens de propulsion non électrique, en particulier des moyens de propulsion chimique.

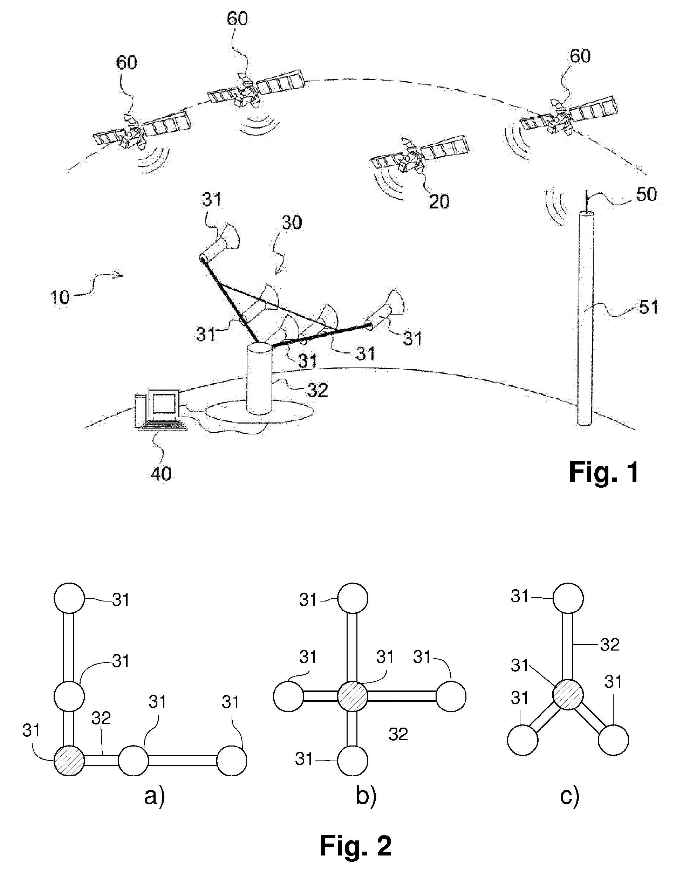

La figure 1 représente de façon schématique un exemple de réalisation d'un système 10 de surveillance d'une phase de transfert d'un satellite 20 d'une orbite GTO vers l'orbite GEO.

Tel qu'illustré par la figure 1, le système 10 de surveillance comporte une antenne réseau 30 terrestre. Par « terrestre », on entend à la surface de la Terre, notamment à même le sol, en haut d'un bâtiment, d'un pylône, etc.

L'antenne réseau 30 comporte une pluralité d'antennes élémentaires 31. Chaque antenne élémentaire 31 présente un lobe principal de rayonnement de largeur égale ou supérieure à 20°. Par « lobe principal de rayonnement », on entend le lobe du diagramme de rayonnement de l'antenne élémentaire comportant la direction principale de rayonnement, c'est-à-dire la direction de rayonnement pour laquelle le gain maximal G_{MAX} de l'antenne élémentaire est obtenu. La largeur du lobe principal de rayonnement correspond à la largeur minimale de la plage angulaire comportant la direction principale de rayonnement et les directions de rayonnement présentant un gain égal ou supérieur à (G_{MAX} - 3dB), quel que soit le plan considéré comportant ladite direction principale de rayonnement de l'antenne élémentaire.

En outre, les antennes élémentaires 31 sont orientées de sorte que leurs champs de vision respectifs se recouvrent au moins partiellement, c'est-à-dire de sorte qu'il existe un champ de vision commun à l'ensemble desdites antennes élémentaires 31. De préférence, lesdites antennes élémentaires 31 sont orientées de sorte que leurs champs de vision respectifs coïncident sensiblement, c'est-à-dire de sorte que le champ de vision commun correspond sensiblement au champ de vision de chaque antenne élémentaire 31.

Du fait que les antennes élémentaires 31 sont peu directives, l'antenne réseau 30 peut couvrir simultanément un champ de vision large, de largeur égale ou supérieure à 20°. Dans des modes préférés de réalisation, chaque antenne élémentaire 31 présente avantageusement un lobe principal de rayonnement encore plus large, par exemple de largeur égale ou supérieure à 40°, voire égale ou supérieure à 60°. Par exemple, un champ de vision de l'ordre de 50° correspond à un bon compromis entre la largeur dudit champ de vision et le gain dans la direction principale de rayonnement.

Le système 10 de surveillance comporte également un dispositif 40 de traitement, relié à chacune des antennes élémentaires 31 de l'antenne réseau 30 par des chaînes de réception respectives (non représentées sur les figures).

De manière conventionnelle, chaque chaîne de réception comporte au moins un amplificateur faible bruit (« Low Noise Amplifier » ou LNA), un circuit abaisseur de fréquence et un convertisseur analogique/numérique. De préférence, les convertisseurs analogique/numérique des différentes chaînes de réception sont synchronisés dans le temps, afin d'assurer la cohérence temporelle des signaux issus des antennes élémentaires 31 et traités par le dispositif 40 de traitement. En outre, les circuits abaisseurs de fréquence sont de préférence asservis sur une même fréquence de référence, par exemple fournie par un même oscillateur local à l'ensemble des chaînes de réception. De la sorte, les dérives différentielles de fréquence et de phase, propres aux chaînes de réception, sont limitées.

Le dispositif 40 de traitement est adapté à traiter les signaux reçus par les différentes antennes élémentaires 31 de l'antenne réseau.

Le dispositif 40 de traitement comporte par exemple au moins un processeur et au moins une mémoire électronique dans laquelle est mémorisé un produit programme d'ordinateur, sous la forme d'un ensemble d'instructions de code de programme à exécuter pour mettre en oeuvre les différentes étapes d'un procédé 70 de surveillance. Dans une variante, le dispositif 40 de traitement comporte également un ou des circuits logiques programmables, de type FPGA, PLD, etc., et/ou circuits intégrés spécialisés (ASIC) adaptés à mettre en oeuvre tout ou partie desdites étapes du procédé 70 de surveillance.

En d'autres termes, le dispositif 40 de traitement comporte un ensemble de moyens configurés de façon logicielle (produit programme d'ordinateur spécifique) et/ou matérielle (FPGA, PLD, ASIC, etc.) pour mettre en oeuvre les différentes étapes d'un procédé 70 de surveillance décrit ci-après.

En particulier, un procédé 70 de surveillance selon l'invention comporte une étape d'estimation de la direction du satellite 20 au cours de la phase de transfert, en fonction d'au moins une mesure de différence de phase, dite « différence de phase utile », entre des signaux correspondant à un signal cible, émis par ledit satellite 20 au cours de la phase de transfert, et reçu sur une paire d'antennes élémentaires 31 de l'antenne réseau 30.

L'estimation de la direction du satellite 20, à partir d'une ou plusieurs mesures de différence de phase utile, met en oeuvre des moyens qui sont considérés comme connus de l'homme de l'art.

Par exemple, une mesure de différence de phase utile, pour une paire d'antennes élémentaires, permet de déterminer une différence de marche entre des trajets parcourus par le signal cible pour arriver sur chacune desdites antennes élémentaires 31. Cette différence de marche peut à son tour être utilisée pour estimer la direction d'arrivée du signal cible par rapport à ladite paire d'antennes élémentaires 31, qui correspond à la direction du satellite 20 par rapport à ladite paire d'antennes élémentaires 31. II est à noter que l'estimation de la différence de marche au moyen d'une mesure de différence de phase utile peut s'avérer ambiguë, dans la mesure où la phase est estimée modulo 2π. Toutefois, cette ambiguïté peut être levée par des moyens qui sortent du cadre de l'invention et qui sont considérés comme connus de l'homme de l'art. Suivant un exemple non limitatif, les mesures de différence de phase utile sont effectuées de façon récurrente de sorte à obtenir des mesures non ambiguës de la variation de la différence de phase utile (en assurant, en fonction d'une connaissance prédéfinie de la vitesse maximale de variation de la différence de marche, que la variation maximale de la différence de marche entre deux mesures successives correspond à une différence de phase utile inférieure à π. De telles mesures de la variation de la différence de phase utile peuvent être utilisées pour estimer la variation de la différence de marche du signal cible émis par le satellite 20. Ainsi, la différence de marche à un instant t1 peut être estimée dès lors que l'on dispose d'une estimation de la différence de marche à un instant t0 (éventuellement fournie par d'autres moyens) et une estimation de la variation de la différence de marche entre les instants t0 et t1.

La direction d'arrivée du signal cible par rapport à la paire d'antennes élémentaires 31 peut également être estimée en utilisant des algorithmes plus complexes. On peut citer, à titre d'exemple non limitatif, l'algorithme MUSIC (voir par exemple : « Multiple Emitter Location and Signal Parameter Estimation », R. O. Schmidt, IEEE Transactions on Antennas and Propagation, Vol. 34, N°3, Mars 1986). L'algorithme MUSIC est en effet basé sur des calculs de matrices de corrélation entre les signaux reçus sur les différentes antennes élémentaires 31, et la phase du résultat de la corrélation entre les signaux reçus sur une paire d'antennes élémentaires 31 correspond à la différence de phase utile entre ces signaux.

Dans la suite de la description, on se place de manière non limitative dans le cas où la direction du satellite 20 est estimée à partir d'une estimation de la différence de marche.

II est à noter que, en considérant une seule paire d'antennes élémentaires pour mesurer des différences de phase utile, il n'est possible d'estimer qu'une direction 2D du satellite 20, dans un plan passant par ledit satellite 20 et ladite paire d'antennes élémentaires 31. Suivant les applications envisagées, l'estimation d'une direction 2D peut suffire, de sorte que l'antenne réseau 30 doit comporter au moins une paire d'antennes élémentaires 31.

Pour estimer la direction 3D (azimut et élévation) du satellite 20 dans un repère associé à l'antenne réseau 30, il est nécessaire de disposer d'au moins deux mesures de différence de phase utile pour deux paires distinctes constituées par au moins trois antennes élémentaires 31 non toutes alignées.

Dans l'exemple non limitatif illustré par la figure 1, l'antenne réseau 30 comporte cinq antennes élémentaires 31 agencées dans un plan, suivant deux axes non orthogonaux. Une telle configuration d'antenne réseau 30 peut donc être utilisée pour estimer la direction 3D du satellite 20. En outre, il est possible de considérer davantage que deux paires distinctes d'antennes élémentaires 31, afin d'améliorer la précision et/ou afin de lever tout ou partie de les ambiguïtés sur l'estimation de la différence de marche.

La figure 2 représente schématiquement des exemples non limitatifs de réalisation de l'antenne réseau 30. La partie a) de la figure 2 représente une vue différente de l'antenne réseau 30 de la figure 1. La partie b) de la figure 2 représente une variante de réalisation plus compacte de l'antenne réseau 30 de la partie a) de la figure 2. La partie c) de la figure 2 représente un exemple non limitatif de réalisation d'une antenne réseau 30 comportant quatre antennes élémentaires 31. Avantageusement, et tel qu'illustré dans les exemples de réalisation illustrés par la figure 2, la distance entre antennes élémentaires 31 adjacentes peut n'être pas la même pour toutes les paires d'antennes élémentaires 31 adjacentes de l'antenne réseau 30, afin d'améliorer la levée d'ambiguïté sur l'estimation de la direction du satellite 20.

Dans des modes préférés de réalisation du système 10 de surveillance, les antennes élémentaires 31 de l'antenne réseau 30 ne sont pas toutes coplanaires. En d'autres termes, les centres de phases desdites antennes élémentaires 31 ne sont pas tous dans un même plan.

De telles dispositions permettent d'améliorer la levée d'ambiguïté sur l'estimation de direction du satellite 20. En effet, en considérant une antenne réseau 30 dont les antennes élémentaires 31 ne sont pas toutes coplanaires, la géométrie des zones d'ambiguïté va dépendre de la direction d'arrivée du signal cible par rapport à ladite antenne réseau 30. Du fait de la mobilité du satellite 20, la direction d'arrivée du signal cible par rapport à ladite antenne réseau 30, et donc également la géométrie des zones d'ambiguïté, va varier au cours du temps. Du fait de l'existence même des zones d'ambiguïté, plusieurs positions sont possibles à chaque instant pour le satellite 20. En estimant successivement les différentes positions possibles, il sera possible d'identifier plusieurs trajectoires possibles pour le satellite 20 au cours du temps. Grâce aux variations de la géométrie des zones d'ambiguïté introduites par la géométrie non plane de l'antenne réseau 30, les trajectoires possibles associées à des positions erronées du satellite 20 vont avoir tendance à disparaître de l'ensemble des solutions vraisemblables déterminées par le calcul. Par conséquent, sur un intervalle de temps suffisamment long, il sera possible d'éliminer les trajectoires associées à des positions erronées du satellite 20, et de ne conserver que la trajectoire associée aux positions successives réelles dudit satellite 20 au cours du temps.

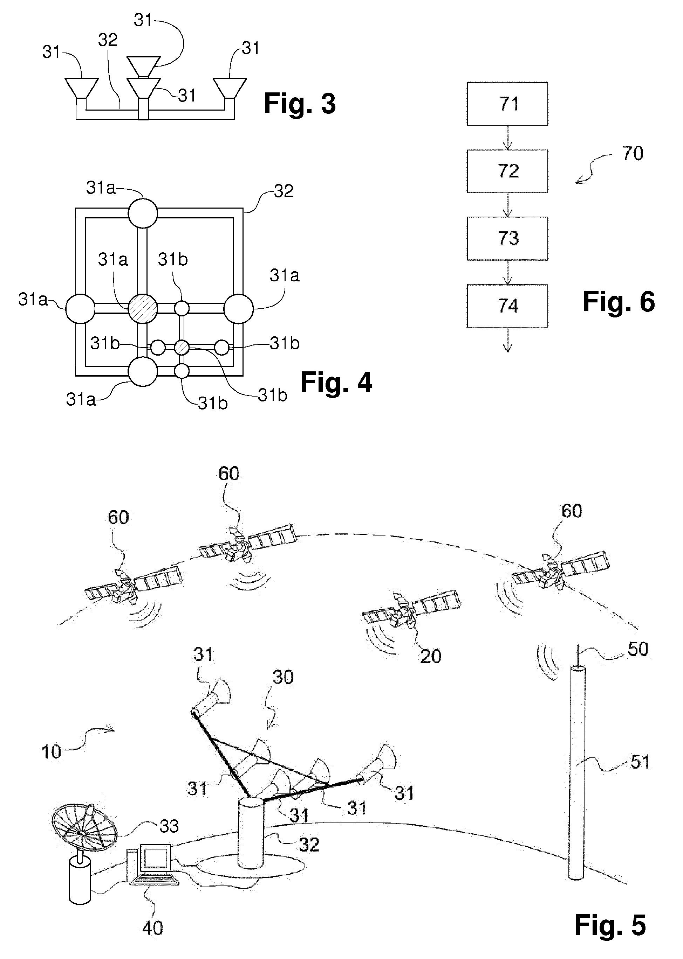

Par exemple, il est possible d'avancer une des antennes élémentaires 31 par rapport aux autres antennes élémentaires 31, dont les centres de phase sont eux coplanaires. Dans les exemples non limitatifs de réalisation illustrés par la figure 2, il est par exemple possible d'avancer l'antenne élémentaire 31 centrale (hachurée sur la figure 2) par rapport aux autres antennes élémentaires 31. La distance, entre l'antenne élémentaire 31 centrale et le plan dans lequel sont situées les autres antennes élémentaires 31 de l'antenne réseau 30, doit permettre de lever les ambiguïtés sans toutefois risquer d'introduire un masquage par l'antenne élémentaire 31 centrale. On désigne par « distance de référence » la distance minimale, mesurée dans le plan, entre l'antenne élémentaire 31 centrale et chacune des antennes élémentaires 31 adjacentes. Par « mesurée dans le plan », on entend que la distance de référence est déterminée en considérant la distance entre la projection orthogonale de l'antenne élémentaire 31 centrale sur ledit plan et chacune des antennes élémentaires 31 adjacentes dans ledit plan. Pour éviter les phénomènes de masquage, la distance entre l'antenne élémentaire 31 centrale et le plan dans lequel sont situées les autres antennes élémentaires 31 est par exemple inférieure à ladite distance de référence. La distance entre l'antenne élémentaire 31 centrale et le plan dans lequel sont situées les autres antennes élémentaires 31 ne doit en outre pas être trop petite afin de permettre de lever les ambiguïtés. Une valeur adaptée de cette distance peut être déterminée par simulation ou par essais par l'homme du métier. Par exemple, une valeur de 0.5 fois la distance de référence permet à la fois d'éviter les phénomènes de masquage et de lever les ambiguïtés, pour une antenne réseau 30 présentant un champ de vision de largeur égale ou supérieure à 40°. A titre d'exemple non limitatif, la figure 3 représente une vue de côté de l'antenne réseau 30 représentée sur la partie b) de la figure 2, dans le cas où l'antenne élémentaire 31 centrale est avancée par rapport aux autres antennes élémentaires 31, dont les centres de phase sont eux coplanaires.

Dans les exemples non limitatifs illustrés par les figures 1 et 2, les antennes élémentaires 31 de l'antenne réseau 30 sont avantageusement solidaires les unes des autres et fixées à une même structure porteuse 32. De la sorte, la géométrie de l'antenne réseau 30 est stable au cours du temps, dans la mesure où un déplacement de l'une des antennes élémentaires 31 est également transmis à l'identique aux autres antennes élémentaires 31.

Rien n'exclut, suivant d'autres exemples, d'avoir des antennes élémentaires 31 non solidaires les unes des autres, par exemple portées par des structures porteuses respectives distinctes. Dans un tel cas, la géométrie de l'antenne réseau 30 est cependant moins stable au cours du temps.

II est à noter que la précision de l'estimation de la direction du satellite 20, en fonction d'une mesure de différence de phase utile pour une paire d'antennes élémentaires 31, augmente avec la distance entre lesdites antennes élémentaires 31 de la paire considérée. Afin d'avoir une précision compatible avec la surveillance de la phase de transfert du satellite 20, la distance entre lesdites antennes élémentaires 31 de la paire considérée doit être très supérieure à la longueur d'onde du signal cible, par exemple au moins dix fois supérieure à la longueur d'onde du signal cible.

Dans le cas où différentes longueurs d'ondes sont possibles, alors il convient de considérer la longueur d'onde maximale λ_{MAX} des signaux à acquérir au moyen de l'antenne réseau 30. De préférence, les antennes élémentaires 31 de chaque paire considérée pour estimer la direction du satellite 20 sont distantes d'au moins 5·λ_{MAX}, voire au moins 10·λ_{MAX}.

La distance, entre les deux antennes élémentaires 31 de l'antenne réseau 30 les plus éloignées l'une de l'autre, est, dans des modes préférés de réalisation, égale ou inférieure à 5·λ_{MAX}. Une telle antenne réseau 30, en particulier dans laquelle les antennes élémentaires 31 sont fixées à une même structure porteuse 32 est compacte et facile à déplacer. En outre, une telle antenne réseau 30 permet de limiter les ambiguïtés sur la différence de phase utile.

Dans le cas d'un signal cible de fréquence minimale 11.7 GHz, la longueur d'onde maximale λ_{MAX} est égale à 2.56 cm. De préférence, l'antenne réseau 30 est dans un tel cas configurée de sorte que :
- la distance maximale entre antennes élémentaires 31 de ladite antenne réseau est égale ou inférieure à 128 cm ;
- la distance minimale entre antennes élémentaires 31 de ladite antenne réseau est égale ou supérieure à 25.6 cm.

La figure 4 représente schématiquement un exemple de réalisation d'une antenne réseau 30 adaptée à fonctionner dans deux bandes distantes de fréquences, par exemple la bande C (entre 4 GHz et 8 GHz) et la bande Ku (entre 12 GHz et 18 GHz). L'antenne réseau 30 illustrée comporte à cet effet deux sous-réseaux d'antennes élémentaires :
- un premier sous-réseau d'antennes élémentaires 31 a optimisé pour la réception de signaux dans une première bande de fréquences (par exemple la bande C) ;
- un second sous-réseau d'antennes élémentaires 31 b optimisé pour la réception de signaux dans une seconde bande de fréquences (par exemple la bande Ku).

Dans l'exemple non limitatif illustré par la figure 4, le premier sous-réseau et le second sous-réseau sont tous deux agencés selon l'exemple illustré par la partie b) de la figure 2. Les antennes élémentaires 31 a, 31 b centrales (hachurées sur la figure 4) du premier sous-réseau et du second sous-réseau sont, dans des modes préférés de réalisation, avancées par rapport aux autres antennes élémentaires 31 a, 31 b, de sorte que les antennes élémentaires 31 a, 31 b de chaque sous-réseau ne sont pas toutes coplanaires. En outre, dans l'exemple non limitatif illustré par la figure 4, les antennes élémentaires 31 a, 31 b du premier sous-réseau et du second sous-réseau sont toutes portées par une même structure porteuse 32.

Tel qu'indiqué précédemment, l'antenne réseau 30 présente un champ de vision large, de largeur égale ou supérieure à 20°, voire égale ou supérieure à 40°, et peut par conséquent être utilisée pour surveiller simultanément plusieurs satellites dans un même angle solide important et/ou rechercher le satellite dans un angle solide important sans avoir à déplacer l'antenne réseau.

Du fait que les antennes élémentaires 31 sont peu directives, le gain d'antenne sera inférieur à celui des antennes des stations TT&C actuelles. Toutefois, la diminution du gain d'antenne peut être compensée par l'observation des signaux reçus sur des intervalles d'acquisition suffisamment longs pour pouvoir au moins détecter le signal cible. Une telle observation des signaux reçus sur des intervalles d'acquisition plus longs ne permet pas nécessairement de décoder le signal cible, si celui-ci est porteur de données (par exemple un signal TT&C, en l'occurrence le signal de télémesure émis par le satellite 20, le signal de télécommande étant émis par la station TT&C), en particulier si la durée des symboles de données est inférieure à la durée des intervalles d'acquisition. Le choix d'une durée adaptée des intervalles d'acquisition, en fonction du gain des antennes élémentaires 31 et du rapport signal sur bruit nécessaire pour détecter, et éventuellement décoder le signal cible, est considéré comme étant à la portée de l'homme de l'art.

L'antenne réseau 30 est principalement mise en oeuvre pour détecter et estimer la direction du satellite 20 au cours de la phase de transfert, afin de s'assurer notamment que la direction estimée est compatible avec la trajectoire prévue dudit satellite 20. S'il s'avère nécessaire de décoder le signal TT&C du satellite (c'est-à-dire le signal de télémesure), celui-ci pourra être décodé à partir des signaux reçus sur l'antenne réseau 30 si la durée des symboles de données du signal TT&C est égale ou supérieure à la durée des intervalles d'acquisition. A défaut, le système 10 de surveillance peut également comporter, en plus de l'antenne réseau 30, une antenne de réception, dite « antenne directive » 33, de gain maximal supérieur aux gains maximaux respectifs de chacune des antennes élémentaires 31 de l'antenne réseau 30. Ainsi, une fois le satellite 20 détecté et sa direction estimée grâce à l'antenne réseau 30, il est possible de diriger l'antenne directive 33 dans la direction estimée du satellite 20 pour décoder le signal TT&C émis par ledit satellite 20 et en vérifier le bon fonctionnement.

L'antenne directive peut être par exemple une antenne préexistante d'une station TT&C.

Dans des modes préférés de réalisation, et tel qu'illustré par la figure 5, l'antenne directive 33 est une antenne dédiée (c'est-à-dire n'appartenant pas par ailleurs à une station TT&C) du système 10 de surveillance, colocalisée avec l'antenne réseau 30. Dans un tel système 10 de surveillance, l'antenne directive 33 peut par exemple être mise en oeuvre pour améliorer la levée d'ambiguïté sur l'estimation de la direction du satellite 20. En effet, dans le cas où, à un instant donné, plusieurs positions sont possibles pour le satellite 20 sur la base des signaux reçus sur les antennes élémentaires 31 de l'antenne réseau 30, alors il sera possible de lever l'ambiguïté en dirigeant l'antenne directive 33 en direction de chacune des positions possibles, pour déterminer laquelle parmi ces positions correspond à la position réelle dudit satellite 20. Par rapport à un système de surveillance selon l'art antérieur qui ne comporterait qu'une antenne directive, il est possible avec un système 10 de surveillance selon l'invention de réduire grâce à l'antenne réseau 30 le nombre de directions dans lesquelles ladite antenne directive 33 doit être dirigée. En outre, contrairement aux antennes de stations TT&C, l'antenne directive 33 n'a pas à assurer l'émission de signaux TT&C (signaux de télécommande) en direction du satellite 20, de sorte que l'antenne directive 33 peut être plus compacte, plus mobile et moins directive que lesdites antennes de stations TT&C. La largeur du champ de vision de l'antenne directive 33 du système 10 de surveillance est de préférence inférieure à 5°, par exemple de l'ordre de 1°.

Afin de permettre d'avoir un rapport signal sur bruit suffisant pour le signal cible, les instabilités de phase introduites par les chaînes de réception de l'antenne réseau 30 doivent être limitées sur toute la durée des intervalles d'acquisition. Par exemple, il est possible de choisir des composants, pour la fabrication desdites chaînes de réception, suffisamment stables pour que les instabilités de phase introduites puissent être négligées sur toute la durée des intervalles d'acquisition.

Afin de limiter les contraintes sur les chaînes de réception, le système 10 de surveillance comporte, dans un mode préféré de réalisation, un émetteur 50 de calibration de référence, immobile par rapport à l'antenne réseau, adapté à émettre un signal de calibration de référence à destination de l'antenne réseau 30. Le procédé 70 de surveillance comporte alors, pour chaque paire d'antennes élémentaires 31 considérée pour estimer la direction du satellite :
- la mesure d'une différence de phase, dite « différence de phase de calibration », entre les signaux correspondant au signal de calibration de référence reçu sur la paire d'antennes élémentaires 31 considérée,
- la compensation des variations des mesures de différence de phase de calibration pour la paire d'antennes élémentaires 31 considérée sur les mesures de différence de phase utile.

L'émetteur 50 de calibration de référence étant immobile par rapport à l'antenne réseau 30, les variations de différence de phase de calibration seront principalement dues aux instabilités de phase des chaînes de réception respectives des antennes élémentaires 31. Ces instabilités de phase, introduites par lesdites chaînes de réception, sont indépendantes de la différence de marche du signal cible. Les variations de différence de phase de calibration constituent par conséquent une estimation des instabilités de phase desdites chaînes de réception, et peuvent être utilisées pour compenser ces instabilités de phase sur les mesures de différence de phase utile.

Dans l'exemple non limitatif illustré par les figures 1 et 5, l'émetteur 50 de calibration de référence est un émetteur terrestre se trouvant en champ lointain par rapport à l'antenne réseau 30. L'émetteur 50 de calibration de référence est par exemple agencé en haut d'un pylône 51, dans le champ de vision de ladite antenne réseau 30. Dans des exemples alternatifs de réalisation, l'émetteur 50 de calibration de référence est embarqué dans un satellite en orbite géostationnaire se trouvant dans le champ de vision de l'antenne réseau 30.

La figure 6 représente les principales étapes d'un procédé 70 de surveillance selon l'invention, dans le cas d'un système 10 de surveillance comportant un émetteur 50 de calibration de référence, pour mesurer la différence de phase utile pour une paire d'antennes élémentaires 31. Tel qu'illustré par la figure 6, ces étapes principales sont les suivantes :
- 71 acquisition des signaux reçus sur les antennes élémentaires 31 de la paire considérée, sur un intervalle d'acquisition de durée ΔT,
- 72 mesure de la différence de phase de calibration entre les signaux acquis au cours de l'intervalle d'acquisition pour la paire d'antennes élémentaires 31 considérée,
- 73 compensation des variations des mesures de différence de phase de calibration sur les phases des signaux reçus sur la paire d'antennes élémentaires 31 considérée,
- 74 mesure de la différence de phase utile pour la paire d'antennes élémentaires 31 considérée.

Les étapes illustrées par la figure 6 sont exécutées pour chaque paire d'antennes élémentaires 31 considérée. Le procédé 70 de surveillance comporte alors une étape (non représentée sur les figures) d'estimation de la direction du satellite 20 en fonction des mesures de différence de phase utile obtenues pour les différentes paires d'antennes élémentaires 31 considérées.

Une fois la direction du satellite 20 estimée, le procédé 70 de surveillance comporte également d'autres étapes (non représentées sur les figures), qui dépendent de la stratégie de surveillance mise en place. Par exemple, la direction estimée (éventuellement complétée par une estimation de l'altitude du satellite 20) peut être comparée à la direction prévue du satellite 20, compte tenu de la trajectoire prévue au cours de la phase de transfert. En cas de différence importante entre la direction estimée et la direction prévue, une antenne directive 33 peut alors être dirigée vers le satellite 20 afin de décoder le signal TT&C émis, et déterminer la cause de cette différence, etc.

Simultanément à l'étape 71 d'acquisition, l'émetteur 50 de calibration de référence émet le signal de calibration de référence, de manière récurrente ou continue sur toute la durée de l'intervalle d'acquisition.

Le signal de calibration de référence peut prendre différentes formes adaptées à permettre de compenser les instabilités de phase des chaînes de réception des antennes élémentaires 31.

Suivant un premier exemple, le signal de calibration de référence est un signal sensiblement sinusoïdal (également connu sous le nom de « Continuous Wave » ou CW). Un tel signal de calibration de référence présente l'avantage d'être simple à générer. En outre, un tel signal de calibration est simple à utiliser dans la mesure où il occupe une bande fréquentielle réduite, dont la fréquence centrale peut être choisie très proche de la bande fréquentielle occupée par le signal cible.

Suivant un autre exemple non limitatif, le signal de calibration de référence est un signal du type à spectre étalé, par exemple une fréquence porteuse modulée par un code prédéfini d'étalement de spectre, présentant de bonnes propriétés d'autocorrélation tel qu'une séquence pseudo-aléatoire de type PN (« Pseudo-Random Noise »), Gold, etc. Du fait de l'étalement de spectre, la densité spectrale de puissance du signal de calibration peut être rendue arbitrairement faible, la corrélation par le code d'étalement de spectre introduisant un gain de traitement d'autant plus important que le code d'étalement de spectre est long.

Dans un mode préféré de mise en oeuvre, l'étape 72 de mesure de différence de phase de calibration comporte :
- soit la corrélation des signaux reçus sur ladite paire d'antennes élémentaires avec le signal de calibration de référence émis, par exemple une corrélation avec le code prédéfini d'étalement de spectre dans le cas d'un signal à spectre étalé,
- soit l'analyse desdits signaux reçus au moyen d'une FFT ou d'une PLL, par exemple dans le cas d'un signal CW.

La différence de phase de calibration est alors calculée comme étant la différence entre les phases des signaux obtenus par corrélation ou après analyse au moyen d'une FFT ou d'une PLL.

II est à noter que la corrélation des signaux reçus par le signal de calibration de référence effectivement émis, ou leur analyse au moyen d'une FFT ou d'une PLL, introduit un gain de traitement qui conduit à une amélioration du rapport signal sur bruit pour les mesures de différence de phase de calibration. En effet, le bruit thermique est moyenné sur la durée d'une fenêtre glissante (par exemple la durée du signal de calibration de référence), de sorte que sa puissance est diminuée. En outre la puissance d'autres signaux, différents du signal de calibration de référence, tels que le signal cible, est également réduite.

Du fait de ce gain de traitement, le signal de calibration de référence peut en outre être émis avec une puissance réduite, ce qui permet de limiter les interférences induites notamment sur le signal cible, ce qui est avantageux dans la mesure où le signal de calibration de référence est préférentiellement émis en même temps que le signal cible, et proche en fréquences de celui-ci.

De préférence, plusieurs mesures de différence de phase de calibration sont effectuées sur les signaux acquis au cours de l'intervalle d'acquisition, à des instants différents dudit intervalle d'acquisition, afin de pouvoir compenser au mieux les instabilités de phase des chaînes de réception. Les mesures et compensations de différence de phase de calibration peuvent par exemple être effectuées à chaque instant de l'intervalle d'acquisition, échantillon par échantillon.

Dans des modes particuliers de mise en oeuvre, il est également possible d'émettre des signaux de calibration de référence à des fréquences différentes, à l'intérieur d'une bande fréquentielle d'acquisition ΔF du signal cible. En effet, si la bande d'acquisition ΔF est large, les instabilités de phase introduites par les chaînes de réception pourront varier de manière sensible avec la fréquence considérée à l'intérieur de ladite bande d'acquisition ΔF. L'émission de signaux de calibration de référence à des fréquences différentes à l'intérieur de ladite bande d'acquisition ΔF permet de compenser au mieux les instabilités de phase des chaînes de réception. En pratique, il peut s'avérer suffisant d'émettre un premier signal de calibration de référence au voisinage d'une borne inférieure de la bande d'acquisition ΔF et un second signal de calibration de référence au voisinage d'une borne supérieure de ladite bande d'acquisition ΔF. Deux mesures de différence de phase de calibration sont ainsi effectuées au niveau des bornes inférieure et supérieure de la bande d'acquisition ΔF, et des mesures pour des fréquences intermédiaires peuvent être obtenues par interpolation.

Les mesures de différence de phase de calibration sont ensuite utilisées au cours de l'étape 73 de compensation pour corriger les signaux acquis correspondant au signal cible émis par le satellite 20. Cette compensation est réalisée de manière conventionnelle.

II est à noter qu'il est également possible de compenser d'autres effets que les instabilités de phase et/ou de fréquence. Notamment, le satellite 20 étant en mouvement en direction de l'orbite GEO, l'effet Doppler associé peut devenir non négligeable, en particulier si la durée ΔT de l'intervalle d'acquisition est importante. Dans un tel cas, il est possible d'estimer les variations fréquentielles induites par l'effet Doppler, en mettant en oeuvre des moyens considérés comme étant connus de l'homme de l'art, et de les compenser sur les signaux acquis correspondant au signal cible émis par le satellite 20.

La mesure de différence de phase utile est ensuite déterminée, au cours de l'étape 74, en fonction des signaux obtenus après compensation pour la paire d'antennes élémentaires 31 considérée. De préférence, ladite étape 74 comporte le calcul de la corrélation desdits signaux entre eux sur toute la durée ΔT de l'intervalle d'acquisition, et la mesure de différence de phase utile est déterminée comme étant la phase du résultat dudit calcul de corrélation.

Lorsque la bande d'acquisition ΔF est large par rapport à la bande fréquentielle occupée par le signal cible, l'étape 74 de mesure de différence de phase utile comporte avantageusement le filtrage des signaux obtenus après compensation par un filtre adapté à atténuer les composantes fréquentielles se trouvant en dehors de la bande fréquentielle occupée par le signal cible. De la sorte, le rapport signal sur bruit du signal cible est amélioré, et ce d'autant plus si la bande fréquentielle occupée par le signal cible est étroite (par exemple si le signal cible est un signal CW).

Dans des modes préférés de mise en oeuvre, pouvant être considérés seuls ou en combinaison avec les modes décrits ci-avant, le procédé 70 de calibration comporte une étape de calibration géométrique (non représentée sur les figures) de l'antenne réseau 30. Au cours de cette étape, la géométrie de l'antenne réseau 30 est estimée en fonction :
- de mesures de différence de phase entre des signaux correspondant à des signaux de calibration géométrique émis par des émetteurs 60 de calibration géométrique,
- des positions desdits émetteurs de calibration géométrique et de la position de l'antenne réseau 30.

Par « géométrie de l'antenne réseau », on entend au moins l'attitude de ladite antenne réseau 30, c'est-à-dire la direction globale pointée par ladite antenne réseau 30. En effet, l'antenne réseau 30 telle qu'illustrée par la figure 1 est orientée par un opérateur dans une direction approximative avec une précision généralement de l'ordre de quelques degrés, ce qui ne permet pas d'avoir une précision suffisante pour estimer la direction du satellite 20 (la précision souhaitée étant généralement de l'ordre de quelques dizaines de millidegrés). En effet, les mesures de différence de phase utile permettent d'estimer la direction relative du satellite 20 par rapport à l'antenne réseau 30. Or il est souhaitable de disposer d'une estimation de la direction absolue du satellite 20, par exemple exprimée dans le repère terrestre, ce qui nécessite de connaître l'attitude de l'antenne réseau 30 dans ledit repère terrestre. Si la précision de l'estimation de l'attitude est faible, alors la précision de l'estimation de la direction absolue sera faible quelle que soit la précision de l'estimation de la direction relative du satellite 20 par rapport à l'antenne réseau.

Les positions des émetteurs 60 de calibration géométrique étant connues, tout comme la position de l'antenne réseau 30, il est possible d'estimer les directions absolues des émetteurs 60 de calibration géométrique dans le repère terrestre. Les mesures de différence de phase pour lesdits signaux de calibration géométrique permettent d'estimer les directions relatives desdits émetteurs 60 de calibration géométrique par rapport à l'antenne réseau 30. En comparant les directions relatives estimées aux directions absolues estimées, il est possible d'estimer l'attitude de l'antenne réseau 30 en mettant en oeuvre des moyens considérés comme étant à la portée de l'homme de l'art.

Tel qu'illustré par la figure 1, tout ou partie des émetteurs 60 de calibration géométrique peuvent être des émetteurs embarqués dans des satellites en orbite géostationnaire et/ou en orbite défilante (LEO, MEO), par exemple des satellites d'un système de navigation par satellite (GPS, Glonass, Beidou, Galileo, etc.).

La précision de l'estimation de l'attitude de l'antenne réseau 30 sera d'autant plus grande que le nombre d'émetteurs 60 de calibration géométrique est grand, et que ceux-ci sont répartis dans tout le champ de vision de l'antenne réseau 30. Ainsi, dans le cas où tous les émetteurs 60 de calibration géométrique sont embarqués dans des satellites en orbite géostationnaire, situés sur l'arc géostationnaire, la précision pourrait être limitée du fait que ceux-ci seraient insuffisamment répartis dans le champ de vision de l'antenne réseau 30. II peut alors s'avérer avantageux de considérer également, par exemple, des émetteurs 60 de calibration géométrique embarqués dans des satellites en orbite défilante. Rien n'exclut en outre, suivant d'autres exemples, d'avoir des émetteurs 60 de calibration géométrique terrestres.

De manière analogue, il est également possible d'estimer, au cours de l'étape de calibration géométrique, outre l'attitude de l'antenne réseau 30, les positions respectives des antennes élémentaires 31 les unes par rapport aux autres, et/ou les attitudes respectives desdites antennes élémentaires 31.

Afin d'obtenir une précision optimale pour l'estimation de la direction du satellite 20, il est avantageux d'exécuter l'étape de calibration géométrique immédiatement avant ou simultanément à l'exécution de l'étape 74 de mesure de différence de phase utile. Par exemple, l'étape de calibration géométrique est de préférence exécutée immédiatement avant l'étape 71 d'acquisition des signaux correspondant au signal cible, et/ou sur lesdits signaux acquis lorsque la bande d'acquisition ΔF permet d'acquérir à la fois ledit signal cible et tout ou partie des signaux de calibration géométrique.

En particulier, si les signaux de calibration géométrique sont très espacés entre eux en fréquences (par exemple pour pouvoir disposer d'un nombre important d'émetteurs 60 de calibration géométrique), et/ou très espacés en fréquences du signal cible par rapport à la largeur de la bande d'acquisition ΔF, il est nécessaire d'acquérir séquentiellement, au cours d'intervalles d'acquisition distincts lesdits signaux de calibration géométrique et le signal cible. Le cas échéant, l'émetteur 50 de calibration de référence est de préférence adapté à changer la fréquence du signal de calibration de référence, et le procédé 70 de surveillance comporte, pour chaque acquisition, une étape de commande de l'émetteur 50 de calibration de référence de sorte à translater en fréquences le signal de calibration de référence dans la bande d'acquisition du signal à acquérir. De la sorte, les instabilités de phase et/ou de fréquence peuvent être corrigées avec précision sur tous les signaux acquis.

Dans le cas où des émetteurs 60 de calibration géométrique émettraient des signaux de calibration géométrique respectifs proches en fréquences, il peut s'avérer complexe, au moyen de l'antenne réseau 30, de distinguer lesdits émetteurs 60 de calibration géométrique. Cela peut par exemple être le cas notamment si les émetteurs 60 de calibration sont embarqués dans des satellites en orbite géostationnaire et si les signaux de calibration géométrique sont des signaux de télémesure émis par lesdits satellites. En effet, étant donné la largeur du champ de vision de l'antenne réseau 30, on peut trouver en pratique jusqu'à quatre signaux de télémesure ou plus sur une plage de fréquence de quelques kHz. Afin de distinguer les émetteurs 60 de calibration géométrique, c'est-à-dire déterminer la fréquence exacte du signal de calibration géométrique émis par chaque émetteur 60 de calibration géométrique, il est possible d'utiliser une antenne directive 33, tel que décrite notamment en référence à la figure 5. En effet, il est possible, si nécessaire, de diriger l'antenne directive 33 en direction de chaque émetteur 60 de calibration géométrique, et déterminer ainsi la fréquence exacte du signal de calibration géométrique qu'il émet et le séparer ainsi des signaux qui lui sont proches en fréquence.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant une seule antenne réseau. Suivant d'autres exemples, le système 10 de surveillance comporte plusieurs antennes réseau, de préférence réparties à la surface de la Terre de sorte que leurs champs de vision respectifs se complètent. Par exemple, un ensemble comportant six à huit antennes réseau réparties géographiquement autour de la Terre permet d'assurer une observabilité suffisante de l'orbite du satellite pendant la phase de transfert. II est également possible d'avoir plusieurs antennes réseau colocalisées. Suivant un exemple préféré de réalisation, le système 10 de surveillance peut comporter deux ou trois antennes réseau colocalisées. Ces antennes réseau colocalisées sont de préférence agencées de telle sorte que leurs champs de vision respectifs ne se recouvrent pas ou au plus partiellement, chacune de ces antennes réseau étant adaptée à couvrir un champ de vision de largeur de préférence égale ou supérieure à 40° (par exemple de l'ordre de 50°).

En outre, l'invention a été décrite en considérant le cas où l'orbite de mission est une orbite GEO et où l'orbite initiale est une orbite GTO. L'invention est néanmoins applicable à d'autres types d'orbite de mission et à d'autres types d'orbite initiale, dès lors que le satellite est transféré d'une orbite initiale vers une orbite de mission, distincte de l'orbite initiale. Notamment, l'orbite de mission peut être tout type d'orbite géosynchrone. L'orbite initiale peut être tout type d'orbite GTO avec ou sans inclinaison, ou encore une orbite super-synchrone, une orbite sub-synchrone, etc.

La description ci-avant illustre clairement que par ses différentes caractéristiques et leurs avantages, la présente invention atteint les objectifs qu'elle s'était fixés. En particulier, le système 10 de surveillance selon l'invention permet de surveiller à moindre coût la phase de transfert d'un satellite depuis une orbite GTO vers l'orbite GEO, voir simultanément plusieurs satellites en phase de transfert sans avoir à dépointer l'antenne réseau.

## Revendications

1. Procédé (70) de surveillance d'une phase de transfert d'un satellite (20) depuis une orbite terrestre, dite orbite initiale, vers une autre orbite terrestre, dite orbite de mission, notamment un transfert utilisant des moyens de propulsion électriques, **caractérisé en ce qu'**il comporte une étape d'estimation de la direction dudit satellite au cours de ladite phase de transfert au moyen d'une antenne réseau (30) terrestre comportant une pluralité d'antennes élémentaires (31), chaque antenne élémentaire présentant un lobe principal de rayonnement de largeur égale ou supérieure à 20°, lesdites antennes élémentaires (31) étant orientées de sorte que leurs champs de vision respectifs se recouvrent, la direction dudit satellite étant estimée en fonction d'au moins une mesure de différence de phase, dite différence de phase utile, entre des signaux correspondant à un signal cible, émis par ledit satellite au cours de la phase de transfert, et reçu sur une paire d'antennes élémentaires (31) de l'antenne réseau.

2. Procédé (70) selon la revendication 1, **caractérisé en ce que** les antennes élémentaires (31) de l'antenne réseau (30) ne sont pas coplanaires.

3. Procédé (70) selon l'une des revendications précédentes, **caractérisé en ce qu'**une antenne de réception, dite antenne directive (33), de gain maximal supérieur aux gains maximaux respectifs de chacune des antennes élémentaires (31) de l'antenne réseau (30) est dirigée dans la direction du satellite (20), estimée au moyen de l'antenne réseau (30), pour recevoir le signal cible émis par ledit satellite.

4. Procédé (70) selon l'une des revendications précédentes, **caractérisé en ce qu'**il comporte :
l'émission, par un émetteur (50) de calibration de référence immobile par rapport à l'antenne réseau, d'un signal de calibration de référence à destination de l'antenne réseau,
la mesure d'une différence de phase, dite différence de phase de calibration, entre des signaux correspondant au signal de calibration de référence reçu sur la paire d'antennes élémentaires,
la compensation des variations des mesures de différence de phase de calibration pour la paire d'antennes élémentaires sur les mesures de différence de phase utile.

5. Procédé (70) selon la revendication 4, **caractérisé en ce que** le signal de calibration de référence est émis au cours d'un intervalle d'acquisition des signaux correspondant au signal cible reçu sur la paire d'antennes élémentaires, et **en ce que** la mesure de la différence de phase utile pour ladite paire d'antennes élémentaires comporte une corrélation desdits signaux acquis entre eux sur toute la durée de l'intervalle d'acquisition, plusieurs mesures de différence de phase de calibration étant effectuées, au cours dudit intervalle d'acquisition, pour compenser les variations des mesures de différence de phase de calibration sur les signaux acquis.

6. Procédé (70) selon l'une des revendications 4 à 5, **caractérisé en ce qu'**il comporte une étape de calibration géométrique de l'antenne réseau, au cours de laquelle la géométrie de l'antenne réseau est estimée en fonction de mesures de différence de phase entre des signaux correspondant à des signaux de calibration géométrique émis par des émetteurs (60) de calibration géométrique et reçus sur l'antenne réseau, et en fonction des positions desdits émetteurs de calibration géométrique et de la position de l'antenne réseau (30).

7. Système (10) de surveillance d'une phase de transfert d'un satellite (20) depuis une orbite terrestre, dite orbite initiale, vers une autre orbite terrestre, dite orbite de mission, notamment un transfert utilisant des moyens de propulsion électriques, **caractérisé en ce qu'**il comporte :
une antenne réseau (30) terrestre comportant une pluralité d'antennes élémentaires (31), chaque antenne élémentaire présentant un lobe principal de rayonnement de largeur égale ou supérieure à 20°, lesdites antennes élémentaires étant orientées de sorte que leurs champs de vision respectifs se recouvrent,
des moyens adaptés à estimer la direction du satellite au cours de ladite phase de transfert en fonction d'au moins une mesure de différence de phase, dite différence de phase utile, entre des signaux correspondant à un signal cible, émis par ledit satellite (20) au cours de la phase de transfert, et reçu sur une paire d'antennes élémentaires (31) de l'antenne réseau (30).

8. Système (10) selon la revendication 7, **caractérisé en ce que** les antennes élémentaires (31) de l'antenne réseau (30) ne sont pas coplanaires.

9. Système (10) selon l'une des revendications 7 à 8, **caractérisé en ce qu'**il comporte une antenne de réception, dite antenne directive (33), de gain maximal supérieur aux gains maximaux respectifs de chacune des antennes élémentaires (31) de l'antenne réseau (30).

10. Système (10) selon l'une des revendications 7 à 9, **caractérisé en ce que** les antennes élémentaires (31) de l'antenne réseau (30) sont solidaires les unes des autres et fixées à une même structure porteuse (32).

11. Système (10) selon l'une des revendications 7 à 10, **caractérisé en ce que** la distance maximale entre antennes élémentaires de l'antenne réseau est égale ou inférieure à 50·λ_{MAX}, λ_{MAX} correspondant à la longueur d'onde maximale des signaux à acquérir au moyen de ladite antenne réseau.

12. Système (10) selon l'une des revendications 7 à 11, **caractérisé en ce que** la distance minimale entre antennes élémentaires de l'antenne réseau est égale ou supérieure à 5·λ_{MAX}, λ_{MAX} correspondant à la longueur d'onde maximale des signaux à acquérir au moyen de ladite antenne réseau.

13. Système (10) selon l'une des revendications 7 à 12, **caractérisé en ce qu'**il comporte :
un émetteur (50) de calibration de référence immobile par rapport à l'antenne réseau (30), ledit émetteur de calibration de référence étant adapté à émettre un signal de calibration de référence à destination de l'antenne réseau,
des moyens adaptés à mesurer une différence de phase, dite différence de phase de calibration, entre des signaux correspondant au signal de calibration de référence reçu sur la paire d'antennes élémentaires (31),
des moyens adaptés à compenser les variations des mesures de différence de phase de calibration pour la paire d'antennes élémentaires sur les mesures de différence de phase utile.

14. Système (10) selon la revendication 13, **caractérisé en ce que** l'émetteur (50) de calibration de référence est un émetteur terrestre ou un émetteur embarqué dans un satellite en orbite géostationnaire.

15. Système (10) selon l'une des revendications 7 à 14, **caractérisé en ce qu'**il comporte des moyens adaptés à calibrer géométriquement l'antenne réseau en fonction de mesures de différence de phase entre des signaux correspondant à des signaux de calibration géométrique émis par des émetteurs (60) de calibration géométrique et reçus sur l'antenne réseau, et en fonction des positions desdits émetteurs de calibration géométrique et de la position de l'antenne réseau (30).

## Patentansprüche

1. Verfahren (70) zur Überwachung einer Verlagerungsphase eines Satelliten (20) von einer Erdumlaufbahn, Anfangsumlaufbahn genannt, in eine andere Erdumlaufbahn, Missionsumlaufbahn genannt, insbesondere eine Verlagerung, die elektrische Antriebseinrichtungen verwendet, **dadurch gekennzeichnet, dass** es einen Schritt des Schätzens der Richtung des Satelliten während der Verlagerungsphase mittels einer terrestrischen Netzantenne (30) enthält, die eine Vielzahl von Elementarantennen (31) aufweist, wobei jede Elementarantenne eine Hauptstrahlungskeule einer Breite gleich oder größer als 20° aufweist, wobei die Elementarantennen (31) so ausgerichtet sind, dass ihre jeweiligen Sichtbereiche sich überdecken, wobei die Richtung des Satelliten abhängig von mindestens einem Phasendifferenzmesswert, Nutzphasendifferenz genannt, zwischen Signalen geschätzt wird, die einem Zielsignal entsprechen, das vom Satelliten während der Verlagerungsphase gesendet wird, und auf einem Paar von Elementarantennen (31) der Netzantenne empfangen wird.

2. Verfahren (70) nach Anspruch 1, **dadurch gekennzeichnet, dass** die Elementarantennen (31) der Netzantenne (30) nicht koplanar sind.

3. Verfahren (70) nach einem der vorhergehenden Ansprüche, **dadurch gekennzeichnet, dass** eine Empfangsantenne, Richtantenne (33) genannt, mit maximaler Verstärkung größer als die jeweiligen maximalen Verstärkungen jeder der Elementarantennen (31) der Netzantenne (30), in die mittels der Netzantenne (30) geschätzte Richtung des Satelliten (20) gerichtet wird, um das vom Satelliten gesendete Zielsignal zu empfangen.

4. Verfahren (70) nach einem der vorhergehenden Ansprüche, **dadurch gekennzeichnet, dass** es aufweist:
das Senden, von einem bezüglich der Netzantenne unbeweglichen Bezugskalibrierungssender (50),
eines Bezugskalibrierungssignals für die Netzantenne,
das Messen einer Phasendifferenz, Kalibrierungsphasendifferenz genannt, zwischen Signalen entsprechend dem Bezugskalibrierungssignal, das auf dem Paar von Elementarantennen empfangen wird,
die Kompensation der Schwankungen der Kalibrierungsphasendifferenzmesswerte für das Paar von Elementarantennen auf die Nutzphasendifferenzmesswerte.

5. Verfahren (70) nach Anspruch 4, **dadurch gekennzeichnet, dass** das Bezugskalibrierungssignal während eines Erfassungsintervalls der Signale entsprechend dem auf dem Paar von Elementarantennen empfangenen Zielsignal gesendet wird, und dass die Messung der Nutzphasendifferenz für das Paar von Elementarantennen eine Korrelation der erfassten Signale untereinander über die ganze Dauer des Erfassungsintervalls aufweist, wobei mehrere Kalibrierungsphasendifferenzmessungen während des Erfassungsintervalls durchgeführt werden, um die Schwankungen der Kalibrierungsphasendifferenzmesswerte auf die erfassten Signalen zu kompensieren.

6. Verfahren (70) nach einem der Ansprüche 4 bis 5, **dadurch gekennzeichnet, dass** es einen Schritt der geometrischen Kalibrierung der Netzantenne aufweist, während dessen die Geometrie der Netzantenne abhängig von Phasendifferenzmessungen zwischen Signalen, die geometrischen Kalibrierungssignalen entsprechen, die von geometrischen Kalibrierungssendern (60) gesendet und von der Netzantenne empfangen werden, und abhängig von den Stellungen der geometrischen Kalibrierungssender und der Stellung der Netzantenne (30) geschätzt wird.

7. System (10) zur Überwachung einer Verlagerungsphase eines Satelliten (20) ausgehend von einer Erdumlaufbahn, Anfangsumlaufbahn genannt, zu einer anderen Erdumlaufbahn, Missionsumlaufbahn genannt, insbesondere eine Verlagerung, die elektrische Antriebseinrichtungen verwendet, **dadurch gekennzeichnet, dass** es aufweist:
eine terrestrische Netzantenne (30), die eine Vielzahl von Elementarantennen (31) aufweist, wobei jede Elementarantenne eine Hauptstrahlungskeule einer Breite gleich oder größer als 20° aufweist, wobei die Elementarantennen so ausgerichtet sind, dass ihre jeweiligen Sichtbereiche sich überdecken,
Einrichtungen, die geeignet sind, die Richtung des Satelliten während der Verlagerungsphase abhängig von mindestens einem Phasendifferenzmesswert, Nutzphasendifferenz genannt, zwischen Signalen, die einem Zielsignal entsprechen, das vom Satelliten (20) während der Verlagerungsphase gesendet und auf einem Paar von Elementarantennen (31) der Netzantenne (30) empfangen wird, zu schätzen.

8. System (10) nach Anspruch 7, **dadurch gekennzeichnet, dass** die Elementarantennen (31) der Netzantenne (30) nicht koplanar sind.

9. System (10) nach einem der Ansprüche 7 bis 8, **dadurch gekennzeichnet, dass** es eine Empfangsantenne, Richtantenne (33) genannt, mit einer maximalen Verstärkung größer als die jeweiligen maximalen Verstärkungen jeder der Elementarantennen (31) der Netzantenne (30) aufweist.

10. System (10) nach einem der Ansprüche 7 bis 9, **dadurch gekennzeichnet, dass** die Elementarantennen (31) der Netzantenne (30) fest miteinander verbunden und an der gleichen Trägerstruktur (32) befestigt sind.

11. System (10) nach einem der Ansprüche 7 bis 10, **dadurch gekennzeichnet, dass** der maximale Abstand zwischen Elementarantennen der Netzantenne gleich oder kleiner ist als 50·λ_{MAX}, wobei λ_{MAX} der maximalen Wellenlänge der mittels der Netzantenne zu erfassenden Signale entspricht.

12. System (10) nach einem der Ansprüche 7 bis 11, **dadurch gekennzeichnet, dass** der minimale Abstand zwischen Elementarantennen der Netzantenne gleich oder größer ist als 5·λ_{MAX}, wobei λ_{MAX} der maximalen Wellenlänge der mittels der Netzantenne zu erfassenden Signale entspricht.

13. System (10) nach einem der Ansprüche 7 bis 12, **dadurch gekennzeichnet, dass** es aufweist:
einen bezüglich der Netzantenne (30) unbeweglichen Bezugskalibrierungssender (50), wobei der Bezugskalibrierungssender geeignet ist, ein Bezugskalibrierungssignal an die Netzantenne zu senden,
Einrichtungen, die geeignet sind, eine Phasendifferenz, Kalibrierungsphasendifferenz genannt, zwischen Signalen entsprechend dem auf dem Paar von Elementarantennen (31) empfangenen Bezugskalibrierungssignal zu messen,
Einrichtungen, die geeignet sind, die Schwankungen der Kalibrierungsphasendifferenzmesswerte für das Paar von Elementarantennen auf die Nutzphasendifferenzmesswerte zu kompensieren.

14. System (10) nach Anspruch 13, **dadurch gekennzeichnet, dass** der Bezugskalibrierungssender (50) ein terrestrischer Sender oder ein an Bord eines Satelliten in geostationärer Umlaufbahn befindlicher Sender ist.

15. System (10) nach einem der Ansprüche 7 bis 14, **dadurch gekennzeichnet, dass** es Einrichtungen aufweist, die geeignet sind, die Netzantenne abhängig von Phasendifferenzmesswerten zwischen Signalen entsprechend geometrischen Kalibrierungssignalen, die von geometrischen Kalibrierungssendern (60) gesendet und auf der Netzantenne empfangen werden, und abhängig von den Stellungen der geometrischen Kalibrierungssender und der Stellung der Netzantenne (30) geometrisch zu kalibrieren.

## Claims

1. A method (70) for monitoring a phase for transferring a satellite (20) from one Earth orbit, called the "initial orbit", to another Earth orbit, called the "mission orbit", in particular a transfer using electric propulsion means, **characterized in that** it comprises a step for estimating the direction of said satellite during said transfer phase by means of a ground array antenna (30) comprising a plurality of elementary antennas (31), each elementary antenna having a main radiation lobe with a width greater than or equal to 20°, said elementary antennas (31) being oriented such that there respective fields of vision overlap, the direction of said satellite being estimated based on at least one measurement of a phase difference, called the "useful phase difference", between signals corresponding to a target signal, transmitted by said satellite during the transfer phase, and received on a pair of elementary antennas (31) of the array antenna.

2. The method (70) as claimed in claim 1, **characterized in that** the elementary antennas (31) of the array antenna (30) are not coplanar.

3. The method (70) as claimed in either one of the preceding claims, **characterized in that** a receive antenna, called the « directional antenna » (33), having a maximum gain greater than the respective maximum gains of each of the elementary antennas (31) of the array antenna (30) is directed in the direction of the satellite (20), estimated by means of the array antenna (30), to receive the target signal transmitted by said satellite.

4. The method (70) as claimed in any one of the preceding claims, **characterized in that** it comprises:
the transmission, by a reference calibration transmitter (50) immobile relative to the array antenna, of a reference calibration signal to the array antenna,
the measurement of a phase difference, called the "calibration phase difference", between signals corresponding to the reference calibration signal received on the pair of elementary antennas,
the compensation of the variations of the calibration phase difference measurements for the pair of elementary antennas based on the useful phase difference measurements.

5. The method (70) as claimed in claim 4, **characterized in that** the reference calibration signal is transmitted during an interval of acquisition of the signals corresponding to the target signal received on the pair of elementary antennas, and **in that** the measurement of the useful phase difference for said pair of elementary antennas comprises a correlation of said acquired signals with one another throughout the acquisition interval, a plurality of calibration phase difference measurements being effected, during said acquisition interval, to compensate the variations of the calibration phase difference measurements based on the acquired signals.

6. The method (70) as claimed in any one of claims 4 to 5, **characterized in that** it comprises a step of geometric calibration of the array antenna, during which the geometry of the array antenna is estimated based on measurements of the phase difference between signals corresponding to geometric calibration signals transmitted by geometric calibration transmitters (60) and received on the array antenna, and based on the positions of said geometric calibration transmitters and the position of the array antenna (30).

7. A system (10) for monitoring a phase for transferring a satellite (20) from one Earth orbit, called the « initial orbit », to another Earth orbit, called the « mission orbit », in particular a transfer using electric propulsion means, **characterized in that** it comprises:
a ground array antenna (30) comprising a plurality of elementary antennas (31), each elementary antenna having a main radiation lobe with a width greater than or equal to 20°, said elementary antennas being oriented so that their respective fields of vision overlap,
means adapted to estimate the direction of the satellite during said transfer phase based on at least one measurement of a phase difference, called the "useful phase difference", between signals corresponding to a target signal, transmitted by said satellite (20) during the transfer phase, and received on a pair of elementary antennas (31) of the array antenna (30).

8. The system (10) as claimed in claim 7, **characterized in that** the elementary antennas (31) of the array antenna (30) are not coplanar.

9. The system (10) as claimed in either one of claims 7 to 8, **characterized in that** it comprises a receive antenna, called the "directional antenna" (33), having a maximum gain greater than the respective maximum gains of each of the elementary antennas (31) of the array antenna (30).

10. The system (10) as claimed in any one of claims 7 to 9, **characterized in that** the elementary antennas (31) of the array antenna (30) are joined together and attached to the same support structure (32).

11. The system (10) as claimed in any one of claims 7 to 10, **characterized in that** the maximum distance between elementary antennas of the array antenna is equal to or less than 50·λ_{MAX}, λ_{MAX} corresponding to the maximum wavelength of the signals to be acquired by means of said array antenna.

12. The system (10) as claimed in one of claims 7 to 11, **characterized in that** the minimum distance between elementary antennas of the array antenna is equal to or greater than 5·λ_{MAX}, λ_{MAX} corresponding to the maximum wavelength of the signals to be acquired by means of said array antenna.

13. The system (10) as claimed in any one of claims 7 to 12, **characterized in that** it comprises:
a reference calibration transmitter (50) immobile relative to the array antenna (30), said reference calibration transmitter being adapted to transmit a reference calibration signal to the array antenna,
means adapted to measure a phase difference, called the "calibration phase difference", between signals corresponding to the reference calibration signal received on the pair of elementary antennas (31),
means adapted to compensate the variations of the calibration phase difference measurements for the pair of elementary antennas based on the useful phase difference measurements.

14. The system (10) as claimed in claim 13, **characterized in that** the reference calibration transmitter (50) is a ground transmitter or a transmitter onboard a satellite in geostationary orbit.

15. The system (10) as claimed in any one of claims 7 to 14, **characterized in that** it comprises means adapted to calibrate the array antenna geometrically based on measurements of the phase difference between signals corresponding to geometric calibration signals transmitted by geometric calibration transmitters (60) and received on the array antenna and based on the positions of said geometric calibration transmitters and the position of the array antenna (30).
